(19) Europäisches Patentamt
European Patent Office
Office européen des brevets

(11) EP 0 845 473 A2

## (12) EUROPÄISCHE PATENTANMELDUNG

(43) Veröffentlichungstag:
03.06.1998 Patentblatt 1998/23

(51) Int. Cl.$^6$: C07F 7/20, C07F 7/18

(21) Anmeldenummer: 97117096.4

(22) Anmeldetag: 02.10.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 27.11.1996 DE 19649023

(71) Anmelder:
HÜLS AKTIENGESELLSCHAFT
45764 Marl (DE)

(72) Erfinder:
• Horn, Michael, Dr.
  79618 Rheinfelden (DE)
• Rauleder, Hartwig, Dr.
  79618 Rheinfelden (DE)
• Seiler, Claus-Dietrich, Dr.
  79618 Rheinfelden (DE)
• Monkiewicz, Jaroslaw, Dr.
  79618 Rheinfelden (DE)

(54) **Verfahren zur Entfernung von Restmengen an acidem Chlor in Carbonoyloxysilanen**

(57) Die vorliegende Erfindung betrifft ein Verfahren zur Entfernung von Restgehalten an acidem Chlor in Carbonoyloxysilanen, wobei man die im Carbonoyloxysilan vorliegende Menge an acidem Chlor durch Zugabe von Metallcarbonoyloxiden nahezu quantitativ umsetzt und die gebildeten Metallchloride abtrennt sowie Carbonoyloxysilane, die nach dem vorliegenden Verfahren erhältlich sind.

EP 0 845 473 A2

**Beschreibung**

Die Erfindung betrifft ein Verfahren zur Entfernung von Restgehalten an acidem Chlor in Carbonoyloxysilanen sowie Carbonoyloxysilane, die nach dem vorliegenden Verfahren erhältlich sind.

Carbonoyloxysilane haben vielseitige Anwendung in der chemischen Industrie gefunden. Sie eignen sich z. B. als vernetzende Siliziumverbindungen bei der Herstellung unter Ausschluß von Wasser lagerfähiger und bei Zutritt von Feuchtigkeit bei Raumtemperatur härtbarer Massen. Beispiele dafür sind Verbindungen wie Methyl-, Ethyl- und Propyl-tris(ethanoyloxy)silan.

Für derartige Silane sind in neuerer Zeit die Anforderungen im Rahmen ihres Einsatzes bezüglich der Reinheit, insbesondere im Hinblick auf den Restgehalt an Chlor in Form von acidem Chlor, extrem angestiegen. Restchlorgehalte in Carbonoyloxysilanen rühren von der nicht vollständigen Umsetzung aller Chloranteile der Organochlorsilan-Einsatzprodukte mit den die Carbonoyloxy-Gruppe in die Reaktion einbringenden Reagenzien her. Bei der vorliegenden Erfindung soll unter acidem Chlor somit Chlor, das im Silan an das Silicium gebunden ist, Chlorwasserstoff sowie als Carbonsäurechlorid vorliegendes Chlor verstanden werden.

Für die Herstellung von Carbonoyloxysilanen in technisch-wirtschaftlichen Maßstäben finden im wesentlichen zwei Verfahrensweisen Anwendung.

Die eine Verfahrensweise bedient sich der Umsetzung von Organochlorsilanen mit Carbonsäuren zu den entsprechenden Organocarbonoyloxysilanen. Diese Verfahrensweise wird sowohl diskontinuierlich als auch kontinuierlich praktiziert.

Die diskontinuierliche Herstellung erfordert die Gegenwart eines inerten Lösungsmittels und lange Reaktionszeiten, um die Restgehalte an acidem Chlor auf Werte unter 100 ppm abzusenken (US-PS 2 437 073, US-PS 2 866 800, US-PS 3 974 198, GB 814 011). Kontinuierliche Umsetzungen von Organochlorsilanen mit Carbonsäuren werden in den Schriften DE-PS 2 801 780, DE-PS 3 221 702, EP-OS 0 003 317, US-PS 4 332 956, US-PS 4 329 484, offenbart. Bei Anwendung geringer Carbonsäureüberschüsse, bezogen auf die eingesetzten Organochlorsilan-Mengen, verbleiben Gehalte an acidem Chlor in Größenordnungen von bis zu 50 ppm; erst die Anwendung großer Carbonsäureüberschüsse - in der Größenordnung von 50 % - ermöglicht die Herabsetzung der Gehalte an acidem Chlor auf Werte kleiner 1 ppm bei Tolerierung unbefriedigender Siloxangehalte.

Die andere Verfahrensweise zur Herstellung von Carbonoyloxysilanen im technischen Maßstab bedient sich der Umsetzung von Organochlorsilan mit Carbonsäureanhydrid zu den entsprechenden Organocarbonoyloxysilanen und Carbonsäurechlorid.

In der FR-PS 1 003 073 wird die diskontinuierliche und gleichzeitige Herstellung von Carbonoyloxysilanen und Carbonsäurechloriden durch Umsetzung von Organochlorsilanen mit Monocarbonsäureanhydriden beschrieben, wobei nach 8stündiger Umsetzungszeit unbefriedigende Produktausbeuten bei nicht erkenntlichen Restchlorgehalten erhalten werden.

Eine kontinuierliche Herstellweise von Carbonoyloxysilanen wird in der EP-PS 0 509 213 offenbart, wobei Organochlorsilane mit Carbonsäureanhydriden in Gegenwart von speziellen Katalysatoren zu Carbonoyloxysilanen und Carbonoylchloriden umgesetzt werden. Die spezielle Verfahrensweise ermöglicht es, den Gehalt an acidem Chlor in den Endprodukten von z. B. 800 ppm auf 3 ppm herabzusetzen. Eine Verringerung der aciden Chlorgehalte unter die Nachweisgrenzen ist mit dieser Verfahrensweise jedoch nur um den Preis stark verlängerter Umsetzungszeiten sowie unter Anwendung deutlich höherer Carbonsäureanhydrid-Mengen erzielbar.

In der Literatur werden auch Verfahrensweisen der Herstellung von Carbonoyloxysilanen durch Umsetzung entsprechender Organochlorsilane mit Alkalicarbonoyloxiden in Gegenwart von großen Mengen an inerten Verdünnungsmitteln beschrieben. Diese Verfahrensweisen sind mit dem Anfall von erheblichen Salzmengen verbunden, wobei das Zielprodukt durch aufwendige Waschprozesse aus dem Reaktionsgemisch entfernt werden muß. Diese Verfahrensweisen sind technisch wenig praktikabel und genügen auch nicht den heutigen ökonomischen und ökologischen Anforderungen (US-PS 2 573 302, GB-PS 640 834, DE-PS 870 554, US-PS 2 537 073, US-PS 2 866 800).

Der vorliegenden Erfindung lag daher die Aufgabe zugrunde, ein Verfahren zur Entfernung von Restmengen an acidem Chlor aus Carbonoyloxysilanen bereitzustellen, das es ermöglicht, den Restgehalt an acidem Chlor in den Carbonoyloxysilanen auf Werte von weniger als 2 Gew.-ppm Chlor zu verringern und das Produkt darüber hinaus im wesentlichen frei von Siloxanen bleibt. Ein besonderes Anliegen der vorliegenden Erfindung war es auch, den Anfall von Lösemitteln sowie Salzen möglichst gering zu halten.

Überraschenderweise wurde nun gefunden, daß es in einfacher und wirtschaftlicher Weise möglich ist, Restgehalte an acidem Chlor in Carbonoyloxysilanen durch Zugabe von Metallcarbonoyloxiden und Abtrennen der gebildeten Metallchloride auf Werte von deutlich weniger als 1 Gew.-ppm zu verringern, d. h. im wesentlichen zu entfernen. Hierzu sind keine nennenswerten Mengen an Lösemittel erforderlich und darüber hinaus entstehen hierbei keine zusätzlichen Mengen an Siloxanen im Produkt.

Die gestellte Aufgabe wird erfindungsgemäß entsprechend den Angaben der Patentansprüche gelöst.

Gegenstand der vorliegenden Erfindung ist daher ein Verfahren zur Entfernung von Restgehalten an acidem Chlor in Carbonoyloxysilanen, das dadurch gekennzeichnet ist, daß man die im Carbonoyloxysilan vorliegende Menge an acidem Chlor durch Zugabe von Metallcarbonoyloxiden nahezu quantitativ umsetzt und die gebildeten Metallchloride abtrennt.

Die für das erfindungsgemäße Reinigungsverfahren als Ausgangsprodukte einsetzbaren Carbonoyloxysilane entsprechen der allgemeinen Formel

$$R_a^1\ R_b^2\ Si(\text{-O-CO-}R^3)_{4\text{-a-b}}\,,$$

wobei a den Wert 3, 2 oder 1 und
b den Wert 1 oder 0 haben kann und a + b ≤ 3 sind;
bevorzugt werden solche mit a = 1 und b = 0.

$R^1$ sowie $R^2$ stehen hier geeigneterweise für Wasserstoff bzw. gesättigte oder ungesättigte Kohlenwasserstoff-Reste mit jeweils 1 bis 10 C-Atomen, die ggf. funktionelle Gruppen, z. B. Halogen, besitzen können, die unter den gegebenen Reaktionsbedingungen nicht angegriffen werden, sowie für cyclische gesättigte oder ungesättigte Kohlenwasserstoff-Reste mit 6 C-Atomen. $R^1$ und $R^2$ können in der vorliegenden Formel gleich oder verschieden sein. $R^3$ steht in der zuvor genannten Formel insbesondere für einen Wasserstoff-, Methyl-, Ethyl- oder Propyl-Rest.

Beispielsweise können folgende Carbonoyloxysilane, die im wesentlichen nach den eingangs besagten Verfahren hergestellt werden und in der Regel einen Gehalt an acidem Chlor von 2 Gew.-ppm und mehr aufweisen, beim erfindungsgemäßen Verfahren eingesetzt werden:

Vinyl-tris(ethanoyloxy)silan, Ethyl-tris(ethanoyloxy)silan,
Methyl-tris(ethanoyloxy)silan, Propyl-tris(ethanoyloxy)silan,
2-Chlorethyl-methyl-bis(ethanoyloxy)silan, Ethyl-tris(propanoyloxy)silan,
Phenyl-tris(ethanoyloxy)silan.

Für die erfindungsgemäßen Verfahren können im allgemeinen alle bekannten Metallcarbonoyloxide der Elemente des Periodensystems verwendet werden, die in geeigneter Weise salzartige Metallchloride bilden, einige bevorzugte Beispiele seien nachfolgend aufgeführt:
Natriumformiat, Natriumacetat, Natriumpropionat, Natriumbutyrat, Kaliumacetat, Magnesiumacetat, Calciumacetat, Bariumacetat, Zinkacetat. Insbesondere werden als Metallcarbonoyloxide Carbonoyloxide der Alkalielemente und/oder Erdalkalielemente eingesetzt. Besonders bevorzugt sind die Carbonoyloxide des Natriums.

Geeigneterweise werden beim erfindungsgemäßen Verfahren die Metallcarbonoyloxide gelöst in der zum verwendeten Carbonoyloxid korrespondierenden Carbonsäure eingesetzt.

Für das erfindungsgemäße Verfahren verwendet man die Carbonoyloxide bevorzugt in solchen Mengen, daß kein Überschuß über die stöchiometrisch notwendige Menge hinaus, bezogen auf den Gehalt an acidem Chlor im zu behandelnden Substrat, vorliegt.

Die vollständige Entfernung des Gehaltes an acidem Chlor in Organocarbonoyloxysilanen kann man entweder durch eine einmalige Zugabe einer entsprechenden Menge eines Metallcarbonoyloxides erzielen oder auch in der Form, daß man geeigneterweise von der zur vollständigen Entfernung der Gehalte an acidem Chlor im Substrat stöchiometrisch erforderlichen Menge an Carbonoyloxid nur ca. 70 - 80 % zudosiert, umsetzen läßt, erneut den Restgehalt an acidem Chlor bestimmt und erneut, je nach Höhe des im Substrat verbliebenen Gehaltes an acidem Chlor, 70 - 80 % der stöchiometrisch erforderlichen Carbonoyloxidmenge zudosiert. Auf diese Weise kann man sich stufenweise an den gewünschten Restgehalt an acidem Chlor im Substrat herantasten, ohne das Produkt durch einen Carbonoyloxid-Überschuß der Gefahr einer Zersetzung bei der destillativen Aufarbeitung auszusetzen.

Geeigneterweise führt man beim erfindungsgemäßen Verfahren die Umsetzung der Restmenge an acidem Chlor bei einer Temperatur im Bereich von 0 bis 200 °C, vorzugsweise bei 0 bis 130 °C, besonders vorzugsweise bei 20 bis 80 °C, durch. Die Umsetzung kann sowohl bei verringertem Druck, beispielsweise oberhalb 400 mbar abs. als auch bei Normaldruck sowie erhöhtem Druck, beispielsweise bis 2 bar abs., durchgeführt werden. Zur Verbesserung und Beschleunigung der Umsetzung kann die Umsetzung ferner unter Rühren erfolgen.

In Abhängigkeit von der Beschaffenheit des zu behandelnden Substrates sollte die Umsetzungstemperatur ggf. so gewählt werden, daß die Umsetzungsdauer und die Löslichkeit der entstehenden Metallsalze im Substrat minimiert sind.

Nach vollzogener Einstellung des gewünschten Restgehaltes an acidem Chlor bzw. der vollständigen Beseitigung desselben erfolgt beim erfindungsgemäßen Verfahren im allgemeinen die Entfernung der gebildeten Metallsalze. Die Abtrennung der bei der Umsetzung gebildeten Metallchloride kann in verschiedener Weise erfolgen. Die Methode der Filtration wird man vorzugsweise in den Fällen anwenden, wo in einem ansonsten spezifikationsgerechten Produkt ein geringer Gehalt an hydrolysierbarem Chlor, d. h. acidem Chlor, weiter reduziert oder unter die Nachweisgrenze abgesenkt werden soll.

Ferner kann die Abtrennung der Metallsalze vom Produkt durch Zentrifugieren erfolgen.

Auch kann die Methode der Destillation, beispielsweise im Rahmen der Aufarbeitung der Organocarbonoyloxysilan-Rohprodukte zum Endprodukt, die üblicherweise im Anschluß an die Metallcarbonoyloxid-Behandlung erfolgt, angewandt werden. Diese Methode wird vorzugsweise dann benutzt, wenn zur Kapazitätssteigerung von Anlagen die Entfernung von Restgehalten an acidem Chlor in einem frühen Stadium abgebrochen wird. Neben der Kapazitätssteigerung ergibt sich als weiterer positiver Effekt eine verminderte Bildung von unerwünschten Siloxanen. Diese Verfahrensweise kann sowohl für die Herstellung von Organocarbonoyloxysilanen auf kontinuierliche als auch diskontinuierliche Art angewendet werden. Bei der diskontinuierlichen Herstellung von Organocarbonoyloxysilanen verbleiben die Metallchloride in der Regel im Destillationssumpf und können in an sich bekannter Weise mit demselben aus dem System entfernt werden.

Bei kontinuierlich arbeitenden Anlagen zur Herstellung von Organocarbonoyloxysilanen stellt sich im Endprodukt, das üblicherweise aus der Kolonnenblase kontinuierlich abgezogen wird, ein konstanter Gehalt an acidem Chlor ein. Entsprechend diesem Gehalt an acidem Chlor kann dem in der Abnahmeblase befindlichen Endprodukt kontinuierlich eine bestimmte, meist stöchiometrische Menge an Metallcarbonoyloxid, z. B. gelöst in der zum Metallcarbonoyloxid korrespondierenden Carbonsäure, zugesetzt und das ausgefallene Metallchlorid nach der Entnahme des Produktes, ggf. nach Kühlung desselben, durch Filtration entfernt werden. - Soweit geringe Menge an Carbonsäuren im Endprodukt stören, können diese destillativ entfernt werden.

Aber auch eine anschließende destillative Aufarbeitung der aus dem Produkt und dem Metallchlorid bestehenden Suspension ist unter bestimmten Gegebenheiten die vorzugsweise anzuwendende Abtrennung der Metallchloride. - Auch die Entfernung der ausgeschiedenen Metallchloride aus dem Produkt ist mit Hilfe eines Separators oder einer Zentrifuge besonders wirkungsvoll zu gestalten.

In der vorliegenden Erfindung sollen unter den von Restchlorgehalten befreiten Organocarbonoyloxysilanen solche Produkte verstanden werden, deren Gehalt an acidem Chlor im allgemeinen weniger als 2 Gew.-ppm, insbesondere weniger als 1 Gew.-ppm, vorzugsweise weniger als 0,5 Gew.-ppm an acidem Chlor, besonders vorzugsweise weniger gleich 0,1 Gew.- ppm, beträgt.

Das erfindungsgemäße Verfahren zur Entfernung von acidem Chlor in Carbonoyloxysilanen kann in hervorragender Weise bei allen Carbonolyoxysilanen, deren Gehalt an acidem Chlor insbesondere auf Werte unter 1 Gew.-ppm verringert werden soll, angewendet werden.

Gegenstand der vorliegenden Erfindung sind somit auch Carbonoyloxysilane nach den Ansprüchen 1 bis 10.

Die Erfindung wird durch die nachfolgenden Beispiele naher erläutert:

## Beispiele

**Vergleichsbeispiel A:**

Die Umsetzung wird in einer üblichen Labor-Apparatur, bestehend aus einem Mehrhalskolben, einem Rührer, einem Tropftrichter, einem Thermometer und einem Rückflußkühler durchgeführt. Zu einem vorgelegten Gemisch von 224,3 g (1,5 mol) Methyltrichlorsilan und 100 ml Hexan werden im Verlauf von 2,5 Stunden 315 g (5,25 mol) Ethansäure zudosiert. Die Zugabe erfolgt, während der Kolbeninhalt am Rückfluß kocht.

Nach Beendigung der Ethansäurezugabe wird weitere 3,5 Stunden am Rückfluß gekocht. Anschließend wird das Hexan bei Normaldruck destillativ entfernt, bis die Sumpftemperatur 120 °C erreicht hat. Danach wird bei einem Druck von 60 Torr das Rückflußkochen eine weitere Stunde fortgesetzt. - Die Bestimmung des Gehaltes an acidem Chlor im Kolbenprodukt ergibt einen Wert von 97 ppm. Nach der destillativen Entfernung überschüssiger Ethansäure liegt ein Produkt folgender Zusammensetzung vor:

| | |
|---|---|
| Methyl-tris(ethanoyloxy)silan | 93,1 Gew.-% |
| Dimethyl-tetrakis(ethanoyloxy)silan | 6,2 Gew.-% |
| Hochsieder | 0,7 Gew.-% |
| Chlor, acid | 83 Gew.-ppm |

**Beispiel 1**

Die im Vergleichsbeispiel A beschriebene Verfahrensweise wird wiederholt. Jedoch wird die Dosierzeit halbiert und die Gesamtreaktionszeit (inklusive Nachreaktionszeit) auf 3,25 Stunden begrenzt. Der Kolbeninhalt wird auf seinen Gehalt an acidem Chlor untersucht. Es wird ein Wert von 420 Gew.-ppm ermittelt, was bei einem Kolbeninhalt von 481 g einer Gesamtmenge an acidem Chlor von 202 mg entspricht.

Zu dem auf 50 °C abgekühlten Kolbeninhalt werden dann 5,832 g einer Lösung von Natriumethanoyloxid in Ethansäure (8,0 g Natriumethanoyloxid in 92 g Ethansäure) zugesetzt und unter starken Rühren 5 Minuten reagieren gelassen.

Nach Abkühlung des Kolbeninhaltes auf Zimmertemperatur wird das ausgefallene Natriumchlorid abgetrennt. In der Flüssigkeit wird ein Gehalt an acidem Chlor von kleiner 0,1 Gew.-ppm ermittelt. Nach destillativer Entfernung überschüssiger Ethansäure liegt ein Produkt folgender Zusammensetzung vor:

| | |
|---|---|
| Methyl-tris(ethanoyloxy)silan | 96,1 Gew.-% |
| Dimethyl-tetrakis(ethanoyloxy)siloxan | 3,1 Gew.-% |
| Hochsieder | 0,5 Gew.-% |
| Ethansäure | 0,3 Gew.-% |
| Chlor, acid | < 0,1 Gew.-ppm |

**Beispiel 2**

Ein 4 500 mm langes Rohr aus säurefestem Werkstoff mit einem Innendurchmesser von 120 mm, gefüllt mit Raschigringen, wird als Kolonne benutzt. Das obere Ende des Kolonnenrohres begrenzt ein Rückflußkühler, der mit $CaCl_2$-Sole von -32 °C betrieben wird. Am unteren Ende des Kolonnenrohres befindet sich ein Kolben, der als Auffanggefäß für das Syntheseprodukt dient. Über eine Pumpe wird aus dem Auffanggefäß laufend eine solche Flüssigkeitsmenge abgezogen, daß das Niveau in diesem einen unveränderten Stand beibehält. Die abgepumpte Flüssigkeit wird in einem Vorlagebehälter, der beheizbar und mit einem Rührer ausgestattet ist, aufgefangen.

In der Mitte des Kolonnenrohres werden mit einer Dosierpumpe 800 ml (992 g, 6.067 mol) Ethyltrichlorsilan pro Stunde eingespeist. Ca. 500 mm oberhalb des Auffangbehälters für das Syntheseprodukt werden 1 100 ml (1 154 g, 19,23 mol) Ethansäure pro Stunde mit einer zweiten Dosierpumpe in das Kolonnenrohr eingegeben. Die Kolonneneintrittstemperatur der Ethansäure liegt oberhalb 100 °C. In der Kolonne wird ein Druck von 120-130 Torr aufrechterhalten. Nach einer Einlaufzeit von ca. 10 Stunden fällt im Auffanggefäß unterhalb des Kolonnenendes ein Produkt an, das einen Gehalt an acidem Chlor von ca. 43 Gew.-ppm aufweist.

Ab diesem Zeitpunkt wird das im Auffanggefäß anfallende Produkt unter Konstanthaltung des Flüssigkeitsniveaus in einen nachgeschalteten Vorlagebehälter überführt und dort unter Rühren mit einer Lösung von Natriumethanoyloxid in Ethansäure bei einer Temperatur von 85 °C versetzt, wodurch die Umsetzung des vorliegenden hydrolysierbaren Chlors zu Natriumchlorid beschleunigt wird. Durch analytische Überwachung wird die Dosierung der Natriumethanoyloxid-/Ethansäure-Lösung so gesteuert, daß ein Gehalt an hydrolysierbarem Chlor im Produkt < 0,1 Gew.-ppm vorliegt. Im vorliegenden Fall wird dieser Wert erreicht, indem dem Vorlagebehältnis stündlich in einer oder mehreren Portionen 3,52 g einer Natriumethanoyloxid-/Ethansäure-Lösung zugeführt werden, die 4,0 g Natriumethanoyloxid in 96 g Ethanol enthält.

Die im Vorlagebehälter sich bildende Suspension aus Produkt und Natriumchlorid wird über ein Filter geleitet und so der Natriumchlorid-Feststoffanteil entfernt. Das anfallende Filtrat hat die folgende Zusammensetzung:

| | |
|---|---|
| Ethyl-tris(ethanoyl)silan | 93,4 Gew.-% |
| Diethyl-tetrakis(ethanoyloxy)siloxan | 4,8 Gew.-% |
| Ethansäure | 1,8 Gew.-% |
| Chlor | < 0,1 Gew.-ppm |

**Beispiel 3**

Die in Beispiel 2 beschriebene Verfahrensweise wird wiederholt. In der Mitte des Kolonnenrohres wird eine Menge von 1 200 ml (1 488 g, 9,10 mol) Ethyltrichlorsilan pro Stunde eingespeist, im unteren Teil der Kolonne werden 1 650 ml (1 731 g, 28,85 mol) Ethansäure pro Stunde eindosiert.

Nach einer Einlaufzeit von 10 Stunden wird im Auffanggefäß unterhalb des Kolonnenendes ein Produkt erhalten, das konstant einen Gehalt an acidem Chlor von ca. 95 Gew.-ppm aufweist. Die in Beispiel 2 beschriebene Nachbehandlung mit 11,635 g pro Stunde einer Lösung von 4,0 g Natriumethanoyloxid in 96,0 g Ethansäure läßt ein Filtrat anfallen, das sich wie folgt zusammensetzt:

| | |
|---|---|
| Ethyl-tris(ethanoyloxy)silan | 95,9 Gew.-% |
| Diethyl-tetrakis(ethanoyloxy)silan | 1,8 Gew.-% |
| Ethansäure | 2,3 Gew.-% |
| Chlor, acid | < 0,1 Gew.-ppm |

**Vergleichsbeispiel B**

In einer üblichen Labordestillationsanlage werden 300 g (2 mol) Methyltrichlorsilan und 990 g (6,7 mol) Ethansäureanhydrid, versetzt mit 40 mg N,N-Dimethyl-Ethansäureamid, erhitzt. Am Kolonnenkopf der Destillationsanlage wird Ethanoylchlorid über einen Zeitraum von 7 Stunden abgezogen, bis der Rückfluß stark nachläßt. Unter Vakuum wird restliches Ethanoylchlorid und überschüssiges Ethansäureanhydrid entfernt. In der Blase verbleibt ein Produkt, das zu 91,1 Gew.-% aus Methyltris(ethanoyloxy)silan mit einem Gehalt an acidem Chlor von 84 Gew.-ppm besteht.

**Beispiel 4**

Das Vergleichsbeispiel B wird wiederholt. Am Kolonnenkopfwird Ethanoylchlorid über einen Zeitraum von 4 Stunden verstärkt abgezogen. Nach Entfernung überschüssigen Ethansäureanhydrids im Vakuum liegt ein Sumpfprodukt vor, das zu 95,7 Gew.-% aus Methyl-tris(ethanoyloxy)silan mit einem Restgehalt an acidem Chlor von 210 Gew.-ppm besteht.

Bei einer Temperatur von 60 °C wird das aus der Destillationsblase in einen Kolben mit Rühreinrichtung übenführte Produkt (432 g) mit 5,22 g einer Lösung von 4,0 g Natriumethanoyloxid in 96,0 g Ethansäure versetzt. Nach einer Reaktionszeit von 5 Minuten wird das gebildete Natriumchlorid absitzen gelassen und die überstehende Flüssigkeit dekantiert. Sie besteht aus 95,1 Gew.-% Methyl-tris(ethanoyloxy)silan, 1,1 Gew.-% Ethansäure und weist einen Gehalt an acidem Chlor kleiner 0,1 Gew.-ppm auf.

**Vergleichsbeispiel C**

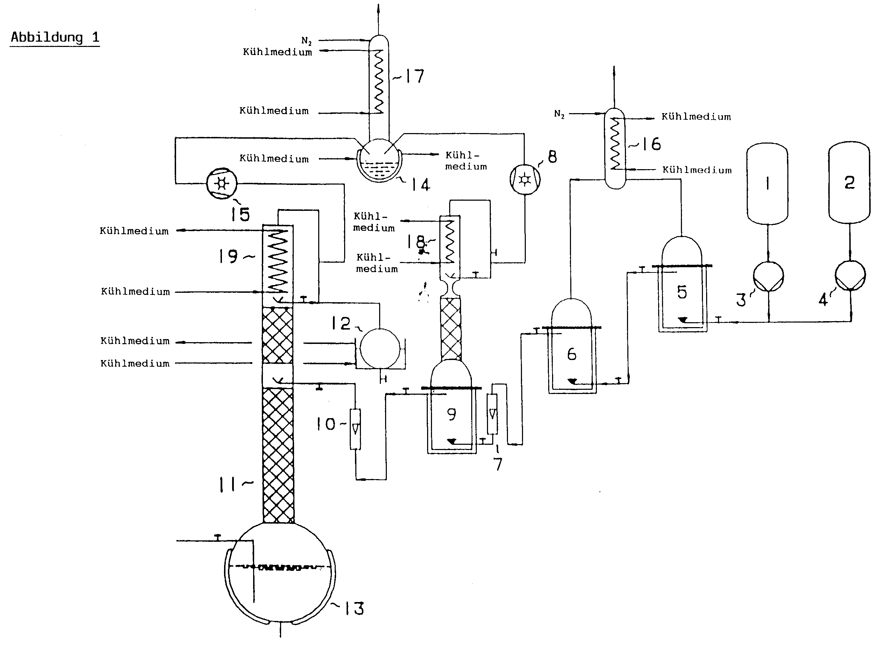

Abbildung 1 zeigt das Schema einer Anlage zur Herstellung von Carbonoyloxysilanen. Ethyltrichlorsilan wird in den Vorlagebehälter **1**, Ethansäureanhydrid in die Vorlage **2** gefüllt. Mittels der Dosierpumpen **3** bzw. **4** werden 157 g (0,96 ml) Ethyltrichlorsilan pro Stunde und 352 g (3,46 mol) Ethansäureanhydrid pro Stunde, versetzt mit 51 mg Triethylamin, in den unteren Teil des Reaktors **5** (Vol. = 1 Lit.) eingespeist, in dem die Erwärmung der Einsatzstoffe auf 60 °C erfolgt. Nach Durchlaufen des Reaktors **5** gelangt das Reaktionsgemisch über den Kühler **16** in den Reaktor **6** (Vol. = 1 Lit.), in dem es auf 60 °C gehalten wird und aus dem es anschließend über den Rotamesser **7** in einer Menge von ca. 510 g pro Stunde in den Destillationsreaktor **9** (Vol. = 1 Lit.) eingegeben wird. In diesem wird das Reaktionsgemisch auf 90 °C erwärmt und das bisher gebildete und sich noch bildende Ethanoylchlorid bei einem Druck von 50 bis 60 mbar (Vakuumpumpe **8**) aus dem Reaktionsgemisch abdestilliert und über den Kühler **18** in die gekühlte Vorlage **14** abgeführt. Die pro Stunde aufgefangene Menge Ethanoylchlorid in der Vorlage **14** beträgt ca. 216 g (2,76 mol).

Über den Rotamesser **10** wird das im Oberteil des Destillationsreaktors **9** abgezogene Produkt in den Mitteleinlauf der Destillationssäule **11** der Kolonne aufgegeben, die aus einem 1,60 m langen Glasrohr mit einem Durchmesser von 5 cm besteht und mit Sattelkörpern von 6 mm Durchmesser gefüllt ist. Der Kühler **19** des Kolonnenkopfes und die Destillatvorlage **12** werden mit einer Kühlflüssigkeit (- 27 °C) beaufschlagt. Den unteren Abschluß der Kolonne bildet ein 4-l-Doppelmantelkolben **13**, beheizt durch einen Thermostaten (Umlaufstemperatur etwa 125 °C). Bei einem Kolonneninnendruck von 5 bis 7 mbar und einer Temperatur von ca. 110 °C in der Kolonnenblase **13** wird das eingespeiste Rohprodukt aufgearbeitet. Aus dem zur Hälfte mit Flüssigkeit befüllten Doppelmantelkolben **13** wird Ethyl-tris(ethanoyloxy)silan ständig in einem Maß abgenommen, daß der Flüssigkeitsspiegel im Kolben **13** unverändert bleibt. Im oberen Teil der Kolonne destilliert überschüssiges Ethansäureanhydrid ab, welches in der Destillatvorlage **12** gesammelt wird. Am Kopf der Kolonne wird über den Kühler **19** und die Vakuumpumpe **15** das restliche Ethanoylchlorid in die mit dem Kühler **17** versehene Vorlage **14** abdestilliert.

Das dem Doppelmantelkolben **13** entnommene Produkt besteht aus

| Ethyl-tris(ethanoyloxy)silan | 97,2 Gew.-% |
|---|---|
| Siloxane | 1,7 Gew.-% |
| Ethansäureanhydrid | 1,1 Gew.-% |
| Chlor, acid | 3 Gew.-ppm |

**Vergleichsbeispiel D**

Die in Vergleichsbeispiel C beschriebene Arbeitsweise wird wiederholt unter Vornahme nachfolgender Änderungen:
Anstelle von 157 g (0,96 mol) Ethyltrichlorsilan pro Stunde und 352 g (3,46 mol) Ethansäureanhydrid pro Stunde werden 235,5 g (1,44 mol) Ethyltrichlorsilan pro Stunde und 528 g (5,19 mol) Ethansäureanhydrid pro Stunde, versetzt mit 76 mg Triethylamin, eingespeist.

Das dem Doppelmantelkolben **13** entnommene Produkt, ca. 230 g pro Stunde, besteht aus:

| Ethyl-tris(ethanoyloxy)silan | ca. 97,7 Gew.-% |
|---|---|
| Siloxane | ca. 1,2 Gew.-% |
| Ethansäureanhydrid | ca. 1,1 Gew.-% |
| Chlor, acid | ca. 35 Gew.-ppm |

**Beispiel 5**

Die in Vergleichsbeispiel D beschriebene Verfahrensweise wird wiederholt unter Vornahme nachfolgender Änderungen:

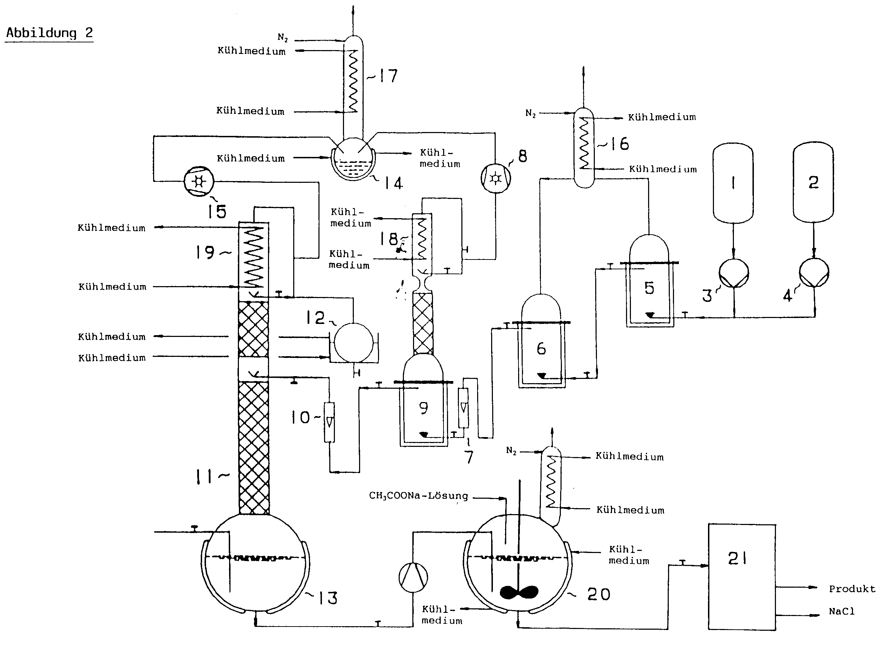

Die in Abbildung 1 dargestellte Apparatur wird um einen Vorlagekolben **20**, der mit vorgeschalteter Fördereinrichtung, Doppelmantel, Rühreinrichtung, aufgesetztem Kühler, Thermometer und Bodenablaßstutzen ausgestattet ist, ergänzt, vgl. Abbildung 2.

Aus der Kolonnenblase **13** wird Produktgemisch konstanter Zusammensetzung, dessen Gehalt an acidem Chlor 41 Gew.-ppm beträgt, abgezogen und in den Vorlagekolben **20**, der mittels eines Wärmekreislaufes auf 90 °C temperiert ist, überführt. Die gleichmäßig der Kolonnenblase **13** entnommene Produktmenge beträgt ca. 230 g pro Stunde.

Dem Vorlagekolben **20** wird im Verlauf einer Stunde eine Menge von 0,266 g einer Lösung von 8,0 g Natriummethanoyloxid in 92,0 g Ethansäure zugesetzt. Die in dem Vorlagekolben sich bildende Suspension aus Natriumchlorid und Produkt wird abgekühlt und über einen Separator **21** geleitet, ggf. anschließend noch über ein Feinfilter. Das von Natriumchlorid befreite Produkt besteht aus:

| Ethyl-tris(ethanoyloxy)silan | 97,6 Gew.-% |
|---|---|
| Siloxane | 1,1 Gew.-% |
| Ethansäureanhydrid | 1,2 Gew.-% |
| Ethansäure | 0,1 Gew.-% |
| Chlor, acid | ca. 0,1 Gew.-ppm |

**Patentansprüche**

1. Verfahren zur Entfernung von Restgehalten an acidem Chlor in Carbonoyloxysilanen,
   dadurch gekennzeichnet,
   daß man die im Carbonoyloxysilan vorliegende Menge an acidem Chlor durch Zugabe von Metallcarbonoyloxiden nahezu quantitativ umsetzt und die gebildeten Metallchloride abtrennt.

2. Verfahren nach Anspruch 1,
   dadurch gekennzeichnet,
   daß man die vorliegende Menge an acidem Chlor durch Zugabe von mindestens einem Metallcarbonoyloxid nahezu quantitativ umsetzt.

3. Verfahren nach Anspruch 1 oder 2,
   dadurch gekennzeichnet,
   daß das eingesetzte Metallcarbonoyloxid in seiner Carbonoyloxy-Komponente mit der Carbonoyloxy-Komponente des Carbonoyloxysilans korrespondiert.

4. Verfahren nach mindestens einem der Ansprüche 1 bis 3,
   dadurch gekennzeichnet,
   daß man die Metallcarbonoyloxide in gelöster Form mit dem Carbonoyloxysilan zusammenbringt.

5. Verfahren nach mindestens einem der Ansprüche 1 bis 4,
   dadurch gekennzeichnet,
   daß man als Lösungsmittel für die Metallcarbonoyloxide die zum jeweiligen Carbonoyloxid korrespondierende Carbonsäure verwendet.

6. Verfahren nach mindestens einem der Ansprüche 1 bis 5,
   dadurch gekennzeichnet,
   daß man die Metallcarbonoyloxide oder deren Lösungen in bis zu äquivalenter Menge bezüglich der vorliegenden Menge an acidem Chlor dem Carbonoyloxysilan zugibt.

7. Verfahren nach mindestens einem der Ansprüche 1 bis 6,
   dadurch gekennzeichnet,
   daß man als Metallcarbonoyloxid ein Carbonoyloxid eines Alkalielementes und/oder eines Erdalkalielementes einsetzt.

8. Verfahren nach mindestens einem der Ansprüche 1 bis 7,
   dadurch gekennzeichnet,
   daß man die Umsetzung des aciden Chlors mit Metallcarbonoyloxiden bei einer Temperatur zwischen 0 und 200 °C durchführt.

9. Verfahren nach mindestens einem der Ansprüche 1 bis 8,
   dadurch gekennzeichnet,
   daß man die Umsetzung des aciden Chlors mit Metallcarbonoyloxiden unter Rühren durchführt.

10. Verfahren nach mindestens einem der Ansprüche 1 bis 9,
    dadurch gekennzeichnet,
    daß das Abtrennen der bei der Umsetzung gebildeten Metallchloride durch Filtration erfolgt.

11. Carbonoyloxysilane erhältlich nach den Ansprüchen 1 bis 10.

Abbildung 1

EP 0 845 473 A2

Abbildung 2